# EUROPEAN PATENT APPLICATION

(11) **EP 2 886 731 A1**
(43) Date of publication of application: **24.06.2015**
(21) Application number: 14175330.1
(22) Date of filing: 01.07.2014
(51) Int. Cl.: E04B 1/26, B21D 28/26, E04C 3/02, B21J 15/00, B21D 19/08, F16B 15/00

(54) **Piece for use in the construction industry and method for the manufacturing thereof**

(30) Priority: 01.07.2013 GB 201311781
(71) Applicant: SIMPSON STRONG-TIE COMPANY, INC., Pleasanton, CA 94588 (US)
(72) Inventor: Hansen, Jacob Moldrup, 8300 Odder (DK); Gregersen, Morten, 8300 Odder (DK)
(74) Representative: Boult Wade Tennant

(57) **Abstract**

The present invention relates to a piece made from a metal sheet or strip material and having a piece body defining an axis of extension. The piece body has a first, generally planar surface, an opposite second, generally planar surface and a thickness defined between the surfaces, said piece being provided with at least one through-going hole with a reinforced edge area. The reinforced edge area comprises a base section, and an annular wall extending from the base section in a direction substantially perpendicular to the axis of extension of the piece body towards a rim portion, said annular wall defining a height and comprising an outer wall surface and an inner wall surface. Furthermore, the invention relates to a method of manufacturing a piece for the construction industry and to a system for stabilising a structure against the forces subjected to the structure from the wind.

## Description

### Field of the invention

The present invention relates to a piece made from a metal sheet or strip material and having a piece body defining an axis of extension, the piece body having a first, generally planar surface, an opposite second, generally planar surface and a thickness defined between the surfaces, said piece being provided with at least one through-going hole with a reinforced edge area. Furthermore, the invention relates to a method of manufacturing a piece for the construction industry and to a system for stabilising a structure against the forces subjected to the structure from the wind.

### Background art

Perforated pieces of the type mentioned above are widely used within the construction industry. Examples of such pieces are wind brace straps or strips used for stiffening frame structures, especially roof frame structures, brackets, such as angle brackets, used for mutually connecting two or more wooden beams, and column base brackets used for connecting the base of columns to foundations. During use, nails, screws or bolts are inserted through the perforations, i.e. holes of the pieces.

WO 2011/123520 discloses a perforated piece of the above-mentioned type having a perforation or hole with a reinforced or strengthened edge. The reinforced edge of the hole is formed by pressing the sheet or strip material at the point of the hole to be formed by means of punches, whereby material from the area of the hole to be formed is forced outwards to be transferred to the edge of the hole.

US 8,356,449 discloses a perforated piece for use in the construction industry. The edge of the hole is reshaped as a direct continuation by drawing the edge of the hole towards the one side of the base material. The drawn portion is shown having a large radius, i.e. forming an obtuse angle between the base material and the side of the drawn portion. The section of the drawn portion underneath the fastening means does not touch the material, e.g. wood, that the piece is connected to. Hence, the drawn portion is likely to deflect when a nail connects the piece to a construction element. This may cause uncertainty for the worker as to whether the piece is in fact in full contact with the construction element. Hence, there is a risk of movement of the piece in relation to the fastening means and thus a risk of the piece breaking apart.

### Summary of the invention

The object of the present invention is inter alia to solve the above problem by providing a piece of the above-mentioned type, especially a wind brace strip being simple and cost-effective to manufacture in a suitable manner.

An additional object of the present invention is to provide a piece for use in the construction industry, especially a wind brace strip having the same strength as traditional wind brace strips but with a smaller thickness.

A further object of the present invention is to provide a piece for use in the construction industry, especially a wind brace strap being friendlier to work with for the end-user than traditional wind brace strips.

The above object is obtained by a piece of the above-mentioned type characterised in that the reinforced edge area comprises a piece made from a metal sheet or strip material and having a piece body defining an axis of extension, the piece body having a first, generally planar surface, an opposite second, generally planar surface and a thickness defined between the surfaces, said piece being provided with at least one through-going hole with a reinforced edge area, wherein the reinforced edge area comprises:
- a base section, and
- an annular wall extending from the base section in a direction substantially perpendicular to the axis of extension of the piece body towards a rim portion, said annular wall defining a height and comprising an outer wall surface and an inner wall surface.

In this way, it is achieved that the piece has a reinforced edge area. Furthermore, the annular rim portion has a uniform height from the surface of the piece body. The uniform height ensures that the fastening means, e.g. a head of a nail or a screw, is in contact with the annular rim along the full perimeter of the annular rim. Thereby, it is achieved that the head of the nail is still kept in the desired position in relation to the body of the nail, which minimises the risk of introduction of cracks in the transition from head to body of the fastening means.

Seen in a cross-sectional view, the base section is defined by the thickness of the annular wall nearest the piece body and the thickness of the piece body nearest the annular wall. The base section continues directly into the annular wall, i.e. perpendicular to the axis of extension of the piece body. The inner surface of the annular wall, i.e. the surface facing the centre of the hole surrounded by the annular wall, continues directly into an inner surface of the base section, said inner surface and the inner surface of the annular wall defining the hole of the piece in its final state.

Tests have shown that reinforcing the edge area by folding the rim portion onto itself is likely to introduce a high number of small cracks. During tension, such cracks may cause the piece to develop bigger cracks, finally causing the piece to break apart. However, by having an annular wall that is substantially perpendicular to the piece body, the edge area is still reinforced, but the risk of introducing cracks is minimised. This is due to the fact that the rim of the annular wall is only bent to approximately 90° compared to bending the annular wall to e.g. more than 135°. This results in a greater number of pieces passing the quality control concerning cracks. Therefore, a reinforcement provided by a perpendicular annular wall provides for a better overall result in the manufacturing of the piece, and of avoiding waste.

Bending the rim of a hole so as to provide a larger hole than the preliminary hole and the annular wall area is a relatively simple process requiring relatively low force and power. In spite thereof, the annular wall provides an overall increase in the strength of the piece compared to a piece provided with holes punched directly in their final size ready for use.

Providing an annular wall compared to folding the rim area material 180° onto itself reduces the risk of introducing cracks on the rim area of the hole. If cracks are introduced, there is a risk of the piece breaking during a short load, but also, long term and smaller loads slowly expand, the cracks, finally causing the piece to break apart. In an embodiment of the present invention, the base section may be reinforced. In yet another embodiment, the base section may have an increased thickness. In another embodiment, the base section may have an increased thickness in a direction parallel to the axis of extension and/or to an axis perpendicular to the axis of extension. In this way, additional strength is added to the edge area of the hole.

In one embodiment, the annular wall may be radially surrounded by a bead formed in the sheet or strip material, the bead being a direct continuation of the piece body connecting the piece body and the base section of the annular wall.

In other words, the annular walled area continues directly, i.e. merges, into the bead (bulb). Advantageously, the bead provides additional stiffness to the sheet or strip material in the area of the hole. In this way, it is possible to have the annular wall extending from an area of the first or second surface of the base material lying in a plane parallel to either of the surfaces. Compared to the situation where the annular wall extends from a surface with no bead, the height of the wall may be increased without increasing the overall height. The height of the annular wall may be increased by a height equal to the thickness of the base material without affecting the overall height of the piece. When a bead is present, the annular wall may have an angle of approximately 90° compared to the piece body and an acute angle to the sloped or slanted surface of the bead.

The annular wall may be radially surrounded by a number of beads formed in the sheet or strip material, the beads being direct continuations of the piece body. In the case of two beads, the first bead may protrude in a first direction and the second bead may protrude in a second direction opposite the first direction. In this way, it is possible to obtain that an annular wall that is higher than the height of the first bead where protrusion of the annular wall still has its edge/rim portion substantially in the same plane as the top of the protrusion of the bead. This is possible because the annular wall has a base section from which it protrudes that is positioned low in the second bead. The second bead may be defined as a sloped area. In this way, it is possible to obtain a desired positioning of the annular wall in relation to the piece body.

In an additional embodiment, the bead protrudes relative to the first, generally planar surface of the sheet or strip material, the protrusion of the bead preferably being less than 0.8 or 0.6 times the thickness of the sheet or strip material.

Preferably, the protrusion of the bead should be relatively small, as an excessive protrusion results in an excessive thickness of the piece, and in case of a wind brace strip being wound into a coil, the diameter thereof becomes excessive.

The bead may comprise an annular sloped area extending from the piece body towards the base section of the annular wall.

In this way, a smooth surface transition from the piece body to the bead is achieved. Furthermore, it is possible to redistribute material during the process, and hence force material from the sloped area to the base section.

In an embodiment, the annular wall tapers from the base section towards the rim portion of the wall. According to an embodiment, the sloped surface of the bead may be thinner than the base section. In another embodiment, at least a part of the bead may be thinner than the thickness of the piece body.

Furthermore, the outer surface of the annular wall may be substantially perpendicular to the axis of extension of the piece body, and the inner surface of the annular wall may taper towards a common edge between the inner and the outer surface of the annular wall of the rim portion of the wall.

In this way, it is possible to guide a fastening means towards the centre of the hole in order to fasten the pieces to a construction part. If the tip of the fastening means, e.g. a nail or a screw, is positioned on the rim of the annular wall, the inner curvature area will facilitate the tip of the fastening means being guided towards the hole surrounded by the annular wall.

In an embodiment, the bead may protrude relative to the first, generally planar surface of the sheet or strip material, the protrusion of the bead being preferably less than 0.8 or 0.6 times the thickness of the sheet or strip material.

In this way, it is achieved that the overall height of the piece is as small as possible in relation to the extension of the annular wall. In an additional embodiment, the bead protrudes relative to the first, generally planar surface of the sheet or strip material, the protrusion of the bead preferably being less than 0.8 or 0.6 times the thickness of the sheet or strip material. Preferably, the protrusion of the bead should be relatively small, as an excessive protrusion results in an excessive thickness of the piece, and in case of a wind brace strip being wound into a coil, the diameter thereof becomes excessive.

In one embodiment, at least a part of the base section of the annular wall may have an increased thickness in relation to the thickness of the piece body measured perpendicular to the piece body.

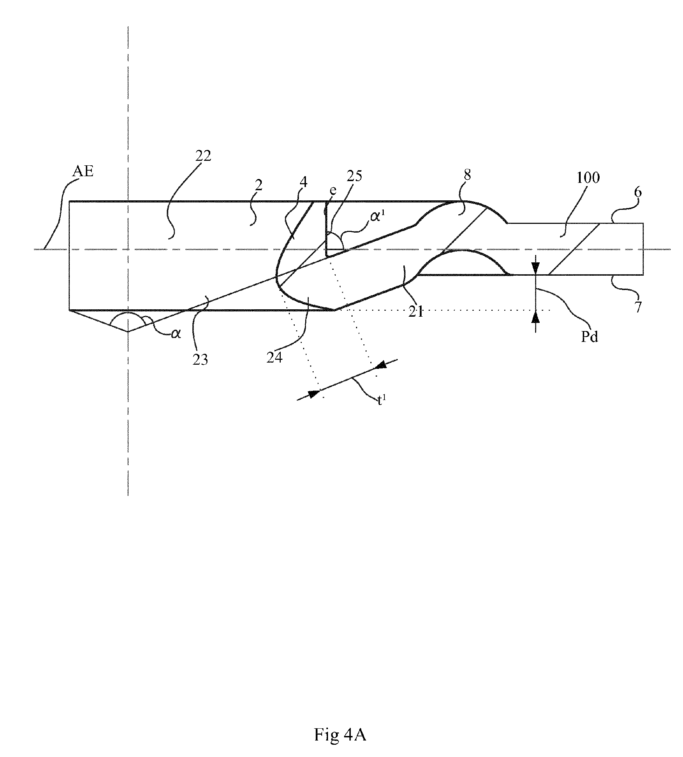

In this way, it is achieved that the strength of the base section is increased. The material necessary for the thickness of the base section to increase is transferred from the bead to the base section, i.e. material is drawn from the area surrounding the preliminary hole. The thickest part of the base section may be measured in an angle of approximately 140° in relation to the piece body measured in a plane comprising a radial of the hole and through the line common to the inner surface of the base section and the second surface, i.e. the outer corner of the base section. The angle *a* of the sloped area may be 80°-160°, preferably 120°-160°, and most preferably approximately 140° in relation to the diametrically opposed sloped area on the opposite side of the hole, as shown in Figures 4A and 4D.

Furthermore, the base section of the annular wall may be offset relative to the second, generally planar, surface of the strip or sheet material and the annular wall arranged to protrude therefrom, the protrusion of the base section of the annular wall being preferably less than 0.8 or 0.6 times the thickness of the sheet or strip material.

Concerning coiled material, the protrusion of the annular wall may be relatively small, as an excessive protrusion results in an excessive thickness of the piece, and in case of a wind brace strip being wound into a coil, the diameter thereof becomes excessive.

Furthermore, minimising the protrusion of the base section reduces the risk of injuring the end-user because it is more difficult to get in contact with the rim of the annular wall.

Moreover, the protrusion of the annular wall and the protrusion of the bead may be approximately 0.5 times the thickness of the sheet or strip material.

Thereby, the thickness of the reinforced edge area is about two times the thickness of the sheet or strip material. As the bead and the annular wall area protrude half the wall thickness in relation to the opposite surfaces of the sheet or strip material, the diameter of a coil of wind brace strap or strip is reduced compared to a product having no bead. This is due to the fact that when the protrusions from the bead extend in one direction compared to the piece body and the protrusion of the annular wall extending in the opposite direction, the risk of a coil having the protrusions aligned with each other when coiling is minimised. Hence, the size of the full coil is kept to a minimum.

When using a thinner material, e.g. for wind bracing straps, it is possible to obtain a more even surface for the next layer to be installed on top of the wind bracing straps, e.g. an underroof. Having installed trusses, the positioning and alignment of the next layer of the roof is easier, which provides an even roof surface. This increases the tightness and durability as well as the general quality of the roof.

Further, the steel material may be hardened steel having relatively low flexibility or elongation.

In an embodiment, the sheet or strip material may be a steel material.

Furthermore, the steel material of the piece may have a tensile strength of at least 220, 250, 280, 320, 350, 400, 450 or 550 MPa.

Steel having a high tensile strength of at least 400, 450 or 550 MPa is preferred as such a steel material allows for using a relatively thin strip or sheet material compared to the traditionally used steel material having a tensile strength of about 250 MPa and a thickness of about 2-3 mm. The use of a strong material is a great advantage, especially when used for wind brace straps or strips. Usually, wind brace strips or straps are wound into a coil having a length of 20-60 m. The weight of such a strip having a width of 40 mm and a thickness of 2 mm is about 12.5-37.5 kg. Tests have shown that it is possible to reduce the thickness and thereby the weight to half of that of the above-mentioned traditionally used steel when steel with a high tensile strength, such as 550 MPa, is used for wind brace straps or strips. Steel according to EN 10346:2009 has shown preferred properties.

Moreover, the height of the annular wall may be less than 3, 2 or 1 times the thickness of the sheet or strip material.

The piece may further comprise a number of holes and be a wind brace strap or strip, an angle bracket or a column base bracket used in the construction industry.

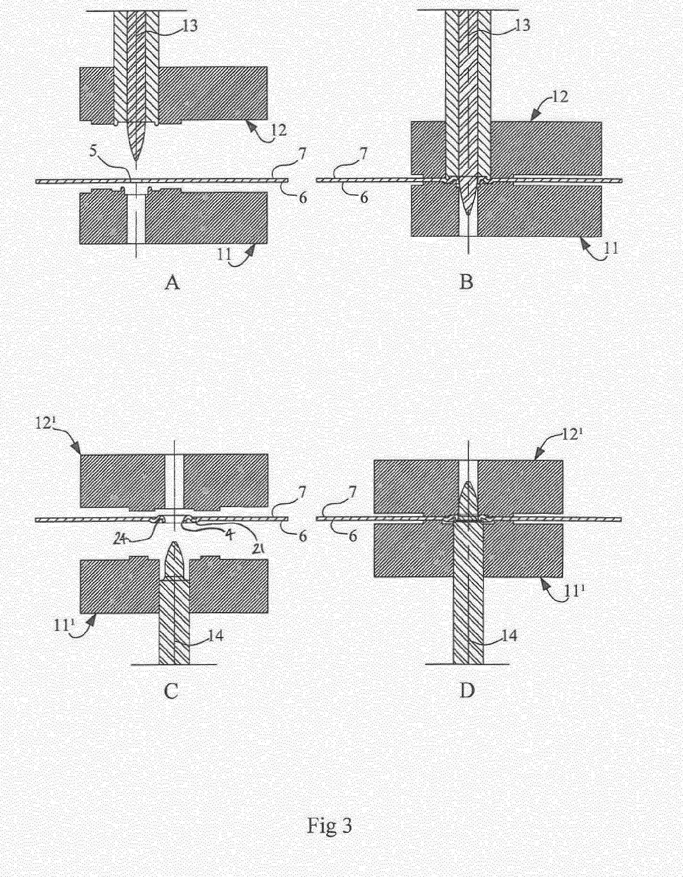

According to an embodiment, the preliminary hole may have a diameter of 1 mm-5 mm, 2 mm-4 mm or approximately 3 mm. If a through-going hole of 5 mm is formed by increasing the preliminary hole approximately 2 mm, an increase of 5-20% strength is obtained when the material is S 550 GD dimension width 40 mm x thickness 0.9 mm, tested according to BS EN ISO 6892-1:2009 A222. Test specimen C was produced according to a first embodiment of the invention. The diameter of the hole was increased by forming or bending a rim portion of the preliminarily formed hole in the sheet or strip material into an angle of substantially 90° relative to the piece body to form an annular wall using a forming, bending or drawing punch 13 acting on a first side of the material (as shown in Figures 3A and 3B and described below). Test specimen B was produced according to a second embodiment of the invention. The specimen was formed using the same method as test specimen C, then the hole was further modified by forcing material into a base section and shortening the rim area using a second forming, bending or pressing punch 14 acting on a second side of the material as shown in Figures 3C and 3D. For comparison, test specimen A was drilled as a 5mm hole with no subsequent forming. Tests carried out have shown the following increase in mean values in the maximum load of the strip:

| | **Material** | **Dimension** | **Maximum load** |
|---|---|---|---|
| **Test specimen A** (5 mm final holes) | S 550 GD | width 40 mm x thickness 0.9 mm | 16.294 N |
| **Test specimen B** (3 mm preliminary holes, 5 mm final hole) | S 550 GD | width 40 mm x thickness 0.9 mm | 17.621 N |
| **Test specimen C** (3 mm preliminary holes, 5 mm final hole) | S 550 GD | width 40 mm x thickness 0.9 mm | 17.997 N |

As shown in the table above, the highest maximum load is achieved by forming the hole using the steps as shown in Figures 3A and 3B (Test specimen C), carrying out a single die press operation to form or bend a rim portion of the preliminarily formed hole in the sheet or strip material into an angle of substantially 90° relative to the piece body to form an annular wall using a forming, bending or drawing punch 13 acting on a first side of the material.

Optionally, the hole may be further formed as shown in Figures 3C and 3D (Test specimen B), forcing material into a base section and shortening the rim area using a second forming, bending or pressing punch 14 acting on a second side of the material. This further forming operation results in a lower maximum load than is obtained by the process shown in Figures 3A and 3B alone. However, it provides a significantly higher maximum load than a simple punched or drilled hole of the same final size (Test specimen A). In addition, the rim and the edge e of pieces formed using the additional forming steps are positioned retracted from the highest point of the bead such that the persons handling the strip are protected from the rim of the annular wall.

According to a further embodiment, the preliminary hole may be 8 mm-13 mm, and the through-going hole may be 10 mm-15 mm. In this way, the properties of heavy duty metal pieces for e.g. brackets for fixation of columns to a concrete base may be increased. In this way, the brackets may be made from a stronger and lighter material than traditionally known brackets. The difference between the preliminary hole and the through-going hole may be 2 mm-5 mm.

According to an embodiment, the angle between the outer surface of the annular wall and the sloped area may be smaller than 90°. According to a further embodiment, the sloped area of the bead may be thinner than the base section. In this way, it is possible to reinforce the edge/rim surrounding the hole by transferring material from the sloped surface to the rim.

According to the invention, the piece may comprise a number of holes and may be a wind brace strap or strip, an angle bracket or a column base bracket used in the construction industry. In a wind brace strap or strip, the holes are arranged in a pattern along the length of the strap or strip.

Further, the present invention relates to a method of manufacturing a piece for the construction industry made from a metal sheet or strip material having a first, generally planar surface, an opposite second, generally planar surface and a thickness, said piece being provided with at least one through-going hole with a reinforced edge area, said method comprising the following steps:
- (A) forming a preliminary hole in the strip or sheet material, and
- (B) forming or bending a rim portion of the preliminarily formed hole in the sheet or strip material into an angle of substantially 90° relative to the piece body, whereby the reinforced edge area is formed as an annular wall.

The method may further comprise the step of subsequent to step A forming a bead radially surrounding the annular wall area and being a direct continuation thereof.

Moreover, step B may comprise the sub step B1 of forming the inner surface of the annular wall to a curved shape so as to form a tapering section extending from the common line between the annular wall and the base section to the common line between the outer surface of the annular wall and the edge e of the annular wall.

In this way, it is achieved that the inner surface of the annular wall is formed so as to receive and guide a fastening means to the construction, e.g. a truss or similar, to which the piece is to be affixed. By positioning the fastening means correctly in the hole, the tapering surface ensures the highest quality of the fixation of the piece to the truss. In an embodiment, the steps B1 and C are performed simultaneously. In this way, increased manufacturing speed is obtained.

Furthermore, steps B1 and C may be performed simultaneously.

Additionally, the annular wall and bead may be formed so that the annular wall protrudes relative to the second, generally planar surface, the protrusion of the base section of the annular wall being preferably less than 0.8 or 0.6 times the thickness of the material, and so that the bead protrudes relative to the first, generally planar surface of the sheet or strip material, the protrusion of the bead being preferably less than 0.8 or 0.6 times the thickness of the sheet or strip material.

In this way, it is achieved that the annular wall is arranged in such a way that the rim portion of the annular wall is in the same plane as or below the bead. Thereby, the worker handling the piece is protected from the rim portion of the annular wall, and the risk of injury due to burrs or sharp edges is minimised.

Finally, the present invention relates to a system for stabilising a structure against the forces subjected to the structure from the wind, the system comprising:
- a piece as described above, and
- a number of fastening means for connecting the piece to a construction, e.g. a roof construction comprising trusses.

In this way, a rigid structure with increased resistance to e.g. loads from the wind is achieved.

The following clauses describe further preferred aspects of the present invention:
1. Piece (1) made from a metal sheet or strip material and having a piece body (100) defining an axis of extension (AE), the piece body (100) having a first, generally planar surface (6), an opposite second, generally planar surface (7) and a thickness (*t*) defined between the surfaces, said piece (1) being provided with at least one through-going hole (2) with a reinforced edge area (3), wherein the reinforced edge area comprises:
   - a base section (24), and
   - an annular wall (4) extending from the base section (24)at an angle of 45 to 135 degrees to the axis of extension (*AE*) of the piece body (100), said annular wall (4) defining a height (*h*) and comprising an outer wall surface (25) and an inner wall surface (22).
2. Piece (1) according to clause 1, wherein the annular wall (4) is radially surrounded by a bead (8) formed in the sheet or strip material, the bead (8) being a direct continuation of the piece body (100) connecting the piece body (100) and the base section (24) of the annular wall (4).
3. Piece (1) according to clause 2, wherein the bead (8) comprises an annular sloped area (21) extending from the piece body (100) towards the base section (24) of the annular wall (4).
4. Piece (1) according to any of the preceding clauses, wherein at least a portion of the outer surface of the annular wall is substantially perpendicular to the axis of extension of the piece body, and wherein the inner surface of the annular wall tapers or curves or narrows towards a common edge between the inner and the outer surface of the annular wall of the rim portion of the wall.
5. Piece (1) according to any of the preceding clauses, wherein the bead (8) protrudes relative to the first, generally planar surface (6) of the sheet or strip material, the protrusion (P_{b}) of the bead (8) being preferably less than 0.8 or 0.6 times the thickness (t) of the sheet or strip material.
6. Piece (1) according to any of the preceding clauses, wherein at least a part of the base section (24) of the annular wall (4) has at least a portion with an increased thickness (*t1*) in relation to the thickness (t) of the piece body (100).
7. Piece (1) according to any of clauses 4-6, wherein the base section (24) of the annular wall (4) is offset relative to the second, generally planar surface (7) of the strip or sheet material and the annular wall (4) arranged to protrude therefrom, the protrusion (P_{d}) of the base section of the annular wall (4) being preferably less than 0.8 or 0.6 times the thickness of the sheet or strip material.
8. Piece (1) according to clause 7, wherein the protrusion of the annular wall (4) and the protrusion (P_{b}) of the bead (8) are approximately 0.5 times the thickness (t) of the sheet or strip material.
9. Piece (1) according to any of the preceding clauses, wherein the sheet or strip material is a steel material,wherein the steel material of the piece (1) preferably has a tensile strength of at least 220, 250, 280, 320, 350, 400, 450 or 550 MPa.
10. Piece (1) according to any of the preceding clauses, wherein the height (*h*) of the annular wall (4) is less than 3, 2 or 1 times the thickness (*t*) of the sheet or strip material.
11. Piece (1) according to any of the preceding clauses, further comprising a number of holes (2) and being a wind brace strap or strip, or an angle bracket or a column base bracket used in the construction industry.
12. Method of manufacturing a piece (1) for the construction industry made from a metal sheet or strip material having a first, generally planar surface (6), an opposite second, generally planar surface (7) and a thickness (*t*), said piece being provided with at least one through-going hole (10) with a reinforced edge area (3), said method comprising the following steps:
   - (A) forming a preliminary hole (5) in the strip or sheet material, and
   - (B) forming or bending a rim portion (10) of the preliminarily formed hole in the sheet or strip material into an annular wall with at least a portion arranged at an angle of 45 to 135 degrees relative to the piece body (100), whereby the reinforced edge area (3) is at least partially formed by theannular wall (4).
13. Method according to clause 12, further comprising the step of:
   - (C) subsequent to step A forming a bead (8) radially surrounding the annular wall area (4) and being a direct continuation thereof.
14. Method according to any of clauses 12-13, wherein step B comprises the sub step of:
   - (B1) forming the inner surface (22) of the annular wall (4) to a tapered, curved or narrowed shape so as to form a tapering section extending from the common line between the annular wall (4) and the base section (24) to the common line between the outer surface (25) of the annular wall (4) and the edge e of the annular wall (4).
15. Method according to any of clauses 12-14, wherein steps B1 and C are performed simultaneously.
16. Method according to clauses 12-15, wherein the annular wall (4) and bead (8) are formed so that the annular wall protrudes relative to the second, generally planar surface (7), the protrusion (P_{d}) of the base section (24) of the annular wall (4) being preferably less than 0.8 or 0.6 times the thickness (t) of the material, and so that the bead (8) protrudes relative to the first, generally planar surface (6) of the sheet or strip material, the protrusion (P_{b}) of the bead (8) being preferably less than 0.8 or 0.6 times the thickness (t) of the sheet or strip material.
17. System for stabilising a structure against the forces subjected to the structure from the wind, the system comprising:
   - a piece (1) according to clauses 1-11, and
   - a number of fastening means (60) for connecting the piece (1) to a construction.
18. A piece substantially as hereinbefore described with reference to or as shown in the accompanying drawings.
19. A method of manufacturing a piece for the construction industry substantially as hereinbefore described with reference to or as shown in the accompanying drawings.
20. System for stabilising a structure against the forces subjected to the structure from the wind substantially as hereinbefore described with reference to or as shown in the accompanying drawings.
21. Piece (1) made from a metal sheet or strip material and having a piece body (100) defining an axis of extension (*AE*), the piece body (100) having a first, generally planar surface (6), an opposite second, generally planar surface (7) and a thickness (*t*) defined between the surfaces, said piece (1) being provided with at least one through-going hole (2) with a reinforced edge area (3), wherein the reinforced edge area comprises:
   - a base section (24), and
   - an annular wall (4) extending from the base section (24) in a direction substantially perpendicular to the axis of extension (*AE*) of the piece body (100) towards a rim portion (10), said annular wall (4) defining a height (h) and comprising an outer wall surface (25) and an inner wall surface (22).
22. Piece according to any of clauses 1 to 11 or clause 21, wherein the outer surface of the annular wall is substantially perpendicular to the axis of extension of the piece body, and wherein the inner surface of the annular wall tapers towards a common edge between the inner and the outer surface of the annular wall of the rim portion of the wall.
23. Piece (1) according to any of clauses 1 to 11 or clause 21 or clause 22, wherein at least a part of the base section (24) of the annular wall (4) has an increased thickness *(t1)* in relation to the thickness (t) of the piece body (100) measured perpendicular to the piece body (100).
24. Method of manufacturing a piece (1) for the construction industry made from a metal sheet or strip material having a first, generally planar surface (6), an opposite second, generally planar surface (7) and a thickness (t), said piece being provided with at least one through-going hole (10) with a reinforced edge area (3), said method comprising the following steps:
   - (A) forming a preliminary hole (5) in the strip or sheet material, and
   - (B) bending a rim portion (10) of the preliminarily formed hole in the sheet or strip material into an angle of substantially 90° relative to the piece body (100), whereby the reinforced edge area (3) is formed as an annular wall (4).
25. System for stabilising a structure against the forces subjected to the structure from the wind, the system comprising:
   - a piece (1) according to clauses 1-11 or clauses 21 to 23, and
   - a number of fastening means (60) for connecting the piece (1) to a construction, e.g. a roof construction comprising trusses (51).

### Brief description of the drawings

The present invention and its many advantages will be described in further detail below, by way of example only, with reference to the accompanying schematic drawings, which for the purpose of illustration show some non-limiting embodiments and in which:
Fig. 1 shows a schematic perspective view of a section of a first embodiment of a piece according to the invention, said piece being a section of a wind brace strap with a pattern of holes having a reinforced edge-area,
Figs. 2A-2D disclose schematic sectional views of steps of forming the holes with a reinforced edge-area, Fig. 2D being a sectional view along the line IId-IId in Fig. 1,
Figs. 3A-3D are schematic sectional views of steps (some optional) in a process or method of using a tool for carrying out the forming of material shown in Fig. 2 for forming the reinforced edge area,
Fig 4A shows an enlarged detail sectional schematic view of the piece as shown in Fig. 2C,
Fig. 4B shows an enlarged detail sectional schematic view of the piece as shown in Fig. 2D,
Fig. 5 shows schematically in perspective a section of a roof structure with a piece according to the invention mounted thereto, and
Figs. 6A-6C show sectional views of the piece according to the invention when mounting it with fastening means.

All the figures are highly schematic and not necessarily to scale, and they show only those parts which are necessary in order to elucidate the invention, other parts being omitted for clarity or merely suggested by way of example.

### Detailed description of the present invention

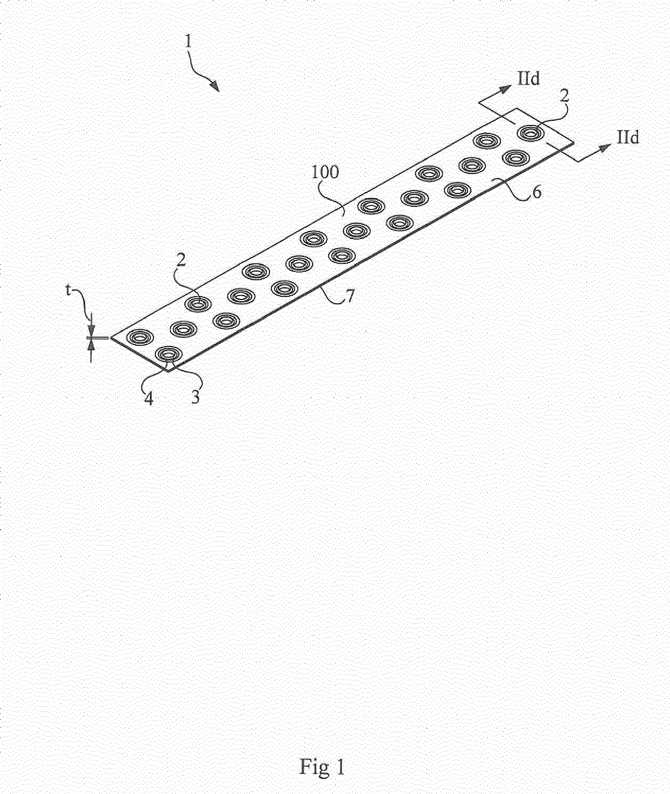

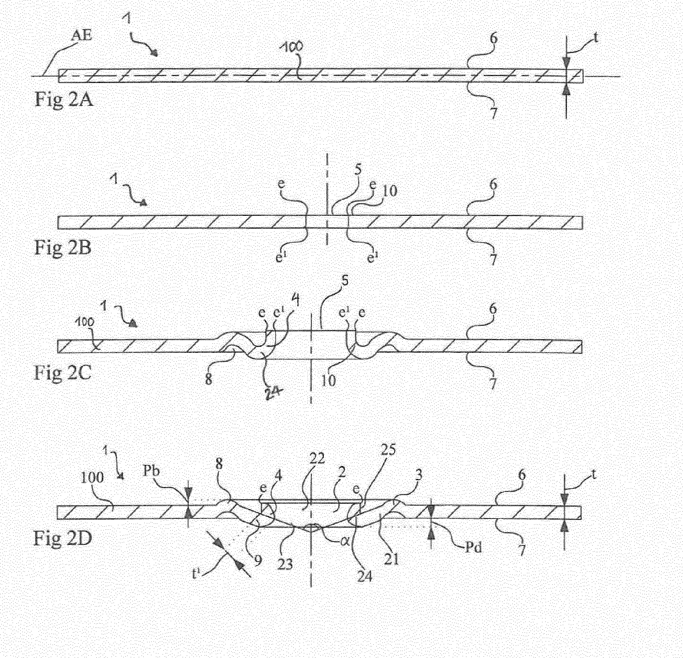

Fig. 1 discloses a section of a piece according to the present invention, formed of a piece of metal strip material defining a piece body 100 having a first, generally planar surface 6, an opposite second, generally planar surface 7 and a thickness t. The piece is a wind brace strip 1 provided with a pattern of holes 2 each having a reinforced edge area 3 (shown in detail in Fig. 2D which is a sectional view along the line IId-IId of Fig. 1). The reinforced edge area 3 comprises an annular wall area 4 in which a rim portion 10 of a preliminary formed hole 5, shown in Fig. 2B, is formed, bent or drawn, thereby forming a annular wall 4.

Figs. 2A-2D show different stages of forming a hole with a reinforced rim piece 1 according to the invention. The axis of extension AE is shown, however, this axis of extension is to be understood as a general axis comprised in a plane (not shown) substantially parallel with both the first and the second planar surfaces 6, 7.

In Fig. 2A, an initial piece of metal is provided having a piece body 100, a thickness t and a first, generally planar surface 6 and an opposite second, generally planar surface 7.

In Fig. 2B, a preliminary hole 5 is formed, and hence, a number of corners e are formed. Corners e are defined having the first planar surface 6 as the one side. Corners e' are defined having the second planar surface 7 as the one side. The area of the piece 1 near the hole 5 is the annular rim area 10.

Fig. 2C and Fig. 4A show the piece 1 of Fig. 2B where the annular rim area 10 has been formed, bent or drawn into a substantially 90° angle in relation to the axis of extension *AE*. Furthermore, the rim area 10 is radially surrounded by a bead 8 formed in the strip material. The bead 8 is formed as a direct continuation of the rim area 10 and the piece body 100, and hence, the rim 10 area continues directly into, i.e. emerges into, the bead 8.

The rim area 10 has changed orientation and is radially surrounded by a bead 8 formed in the strip material. As shown in Fig. 2C, the bead 8 is still formed as a direct continuation of the rim area 10. Due to the change of orientation of the rim area 10, the rim area is in fact to be considered an annular wall 4. The bead provides a stiffening of the material.

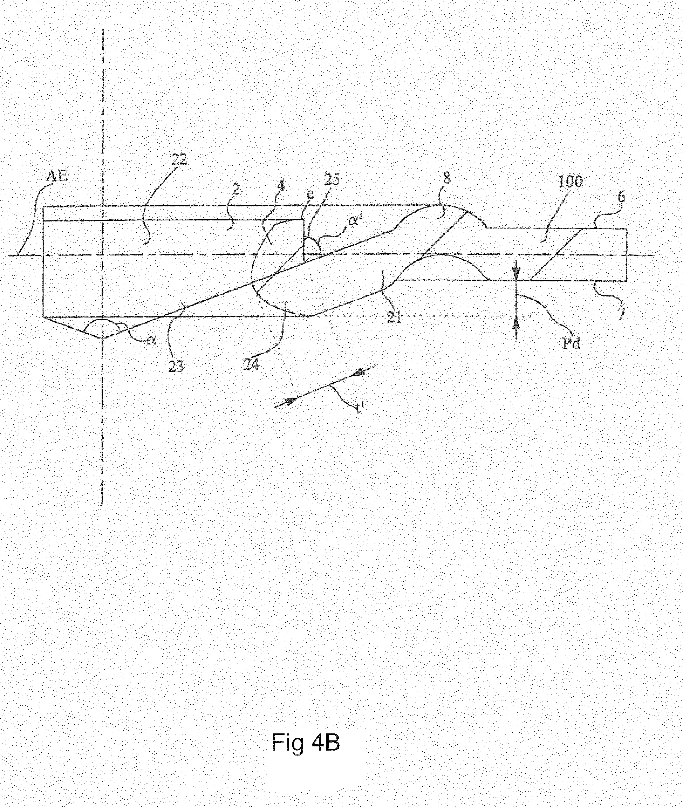

A further embodiment of the invention is shown in Fig. 2D and Fig. 4B It can be seen from Fig. 2D that in the embodiment shown, the annular wall 4 projects from a base section 24. The base section 24 is a transition area where the bead 8 transitions into the annular wall 4. Furthermore, in the embodiment shown, the sloped area 21 has an angle a (alpha) in relation to the the diametrically opposed sloped area on the opposite side of the hole, as shown in Fig. 4B.

Furthermore, in Fig. 2D, the inner surface 22 of the annular wall 4 has been provided with a curvature 23, seen in a cross-sectional view. The annular wall 4 projects from the base section 24. However, the transition from the base section 24 to the annular wall 4 is smooth. Hence, the curvature 23 of the inner surface 22 continues directly into a curvature of the base section 24. The inner surface 22 of the annular wall 4, and hence the annular wall 4 itself, is formed so that the one edge e' is removed and that the annular wall 4 only comprises a single edge e. This edge e is common to the end of the curvature 23, i.e. the inner surface of the annular wall 22 merges into a the edge e, and hence, the edge e is common to the outer surface 25 of the annular wall 4 and the inner surface 22 of the annular wall 4. Thereby, the sharp edges e are substantially removed from the surface that the end-user is in contact with. Hence, the risk of injury to the end-user is strongly minimised and designed out. Finally, from Fig. 2D, it can be seen that the base section 24 of the annular wall 4 is offset relative to the second, generally planar surface 7 so as to protrude from a plane parallel to the planar surface 7. The protrusion P_{d} of the annular wall 4 area is about half the thickness *t* of the strip material. Further, it can be seen that the bead 8 protrudes relative to the first, generally planar surface 6 of the strip material the piece body 100, the protrusion P_{b} of the bead 8 being about half the thickness *t* of the sheet material.

By minimising the sum of P_{d} and P_{b} and *t*, an even surface is achieved, and the final roof to be laid on the battens will be more even. Hence, the additional layers of roof to be mounted on top of the battens and the wind brace strap are easier to align to create an even roof surface.

Preferred embodiments of the method according to the invention for producing a piece according to the invention are now described with reference to Figs. 2 and 3. When comparing Figs. 2A and 2B, it can be seen that in a first embodiment, first a preliminary hole 5 is formed in the strip material. Thereafter, the rim portion 10 of the preliminarily formed hole 5 is formed, bent or drawn about 90° so as to protrude relative to the first, generally planar surface 6 of the strip material, as seen in Fig. 2C and Fig. 4A. At the same time, the optional bead 8 surrounding the rim portion may be formed, see Fig. 2C and Fig. 4A.

A tool for forming a piece by way of the above steps or operations is illustrated in Figs. 3A and 3B. The tool comprises a lower die 11 and an upper die 12. The upper die 12 is provided with a forming, bending or drawing punch forming bending or drawing the rim portion of the preliminary formed hole 5 to approximately 90°, as shown by comparing Figs. 3A and 3B with Figs. 2B and 2C. Further, as it can be seen from comparing Figs. 3A and 3B, the upper die 12 and lower die 11 are contoured so as to form the bead 8 and provide the strip material with a contour around the hole, as shown in Fig. 2C.

After having formed or bent the rim portion to approximately 90°, the forming, bending or drawing punch 13 is removed or retracted from the upper die 12.

Fig. 4A shows an enlarged cross sectional view of a part of the reinforced rim area of a hole as shown in Fig. 2C. It can be seen that the base section 24 (indicted schematically by dotted lines) is the section in connection to the sloped area 21 and the annular wall 4. In other words, the sloped area 21 continues via the base area 24 into the annular wall 4. In order to avoid cracks, the outer surface of the annular wall 25 is kept in an approximately 90° (α1) orientation in relation to the axis of extension of the piece body 100.

The angle α of the sloped area *may be* 80°-160°, preferably 120°-160°, and most preferably approximately 140° in relation to the diametrically opposed sloped area on the opposite side of the hole, as shown in Fig. 4A.

The angle between the outer surface 25 of the annular wall 4 and the sloped area may be smaller than 90°.

The outer surface 25 of the annular wall 4 is preferably substantially perpendicular to the axis of extension *AE*. The angle of the outer surface 25 of the annular wall 4 in relation to the axis of extension *AE* (angle *α1* as shown in Fig. 4A) may be 45°-135°, preferably 60°-110°, preferably 80°-110°, preferably 84°-106°, preferably 88°-102°, preferably 85°-95° and most preferably substantially 90°.

The angles α and α*1* may vary depending on manufacturing tolerances. In addition, the angle α1 may depend on formation of the piece and the angle α realised during fabrication of the piece. For example, if angle α1 is formed in a first stage of the forming process, and then the angle of the sloped area 21 is different in a subsequent stage of the forming process, the angle α1 will change as a consequence.

In a further embodiment, the metal strip is moved to an optional second forming or punching station, and a lower forming, bending or pressing punch 14 of a lower die 11' is moved towards the 90° formed or bent rim portion so as to form the annular wall 4, as shown by comparing Figs. 3C and 3D with Figs. 2C and 2D. At this second station, the annular wall 4 and the base section 24 are formed in detail. Material from the sloped area 21 is forced towards the base section 24, hence reinforcing the rim area further. Furthermore, the 90° rim area as formed in Fig. 3B is shortened, maintaining an outer surface of the annular wall in an approximately 90° angle in relation to the piece body, i.e. the generally planar surfaces 6, 7.

Fig. 4B shows a further enlarged cross sectional view of a part of the reinforced rim area of a hole as shown in Fig. 2D. It is seen that the rim and the edge e are positioned retracted from the highest point of the bead 8. In this way, the persons handling the strip are protected from the rim of the annular wall. If, in another embodiment, the annular wall is to be higher, the edge e may be further processed in a manner which further ensures the safety of the worker handling the strip (e.g. smoothing of edge e).

It is seen that the base section 24 indicated betweendotted lines is the section in connection to the sloped area 21 and the annular wall 4. In other words, the sloped area 21 continues via the base area 24 into the annular wall 4. In order to avoid cracks, the outer surface of the annular wall 25 is kept in an approximately 90° orientation in relation to the axis of extension of the piece body 100.

The angle α of the sloped area *may be* 80°-160°, preferably 120°-160°, and most preferably approximately 140° between it andthe diametrically opposed sloped area on the opposite side of the hole, as shown in Fig. 4A. Material from the sloped area 21 and/or the bead 8 is relocated to reinforce the base section 24. In this way, it is achieved that the base section 24 is reinforced, further creating resistance against cracking of the material.

The angle between the outer surface 25 of the annular wall 4 and the sloped area may be smaller than 90°.

The outer surface 25 of the annular wall 4 is preferably substantially perpendicular to the axis of extension AE. The angle of the outer surface 25 of the annular wall 4 in relation to the axis of extension AE (angle *α1* as shown in Fig. 4A) may be 45°-135°, preferably 60°-110°, preferably 80°-110°, preferably 84°-106°, preferably 88°-102°, preferably 85°-95° and most preferably approximately 90°.

Tensile tests have been carried out on a wind brace strip according to the present invention, and on a traditional wind brace strip. The tests have shown that the maximum tensile force to which the strip may be subjected is 5-20% higher for a wind brace strip according to the present invention than for a traditional wind brace strip. The wind brace strips were manufactured in steel S550 GD according to European standard EN10346:2009 and had a thickness of 0.9 mm and a width of 40 mm.

The preferred strip or sheet material is made of steel, and tests have shown that it is advantageous to use steel with a relatively high tensile strength of about 350 to 550 MPa or more, as it is thereby possible to reduce the thickness of the piece compared to pieces traditionally used in the construction industry where soft steel has been used to date.

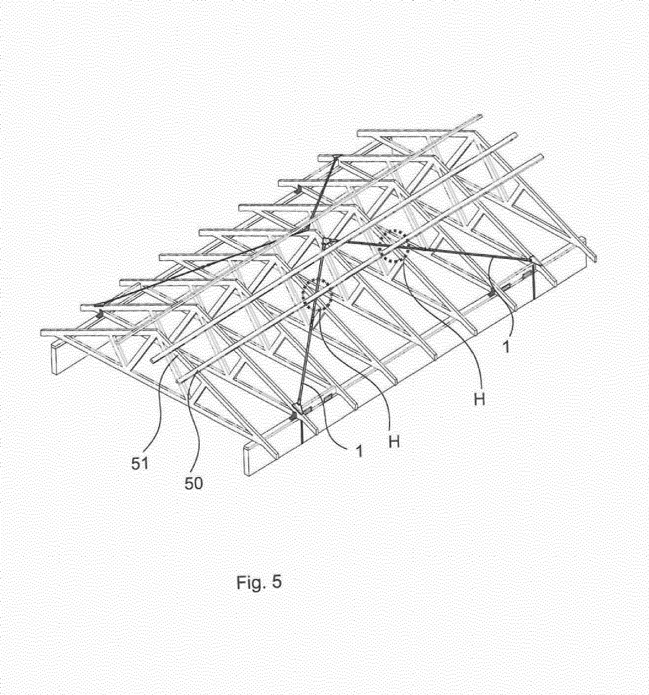

Fig. 5 shows a perspective view of the general structure of the roof of a house or other building. The piece 1 is in this situation a wind brace strip. It is seen that the wind brace strip 1 is positioned between the battens 50 and the trusses 51. It is furthermore shown only at certain positions that the wind brace strip 1 is positioned between the battens 50 and the trusses 51 Hence, at the positions where the wind brace strip is under the battens 50, the plane of the upper surface of the battens will be uneven. This may cause the final layers of the roof to become uneven, and the risk of misalignment of the roof elements and cracking of the roof elements is increased. Indicated by dotted circles, the areas H indicate a location where the above situation could occur. It will be realised that only a few battens 50 are shown. Utilising a wind brace strip according to the present invention limits misalignment and renders the upper surface as even as possible because the protrusions from the strip surface are small, relative to prior art strips.

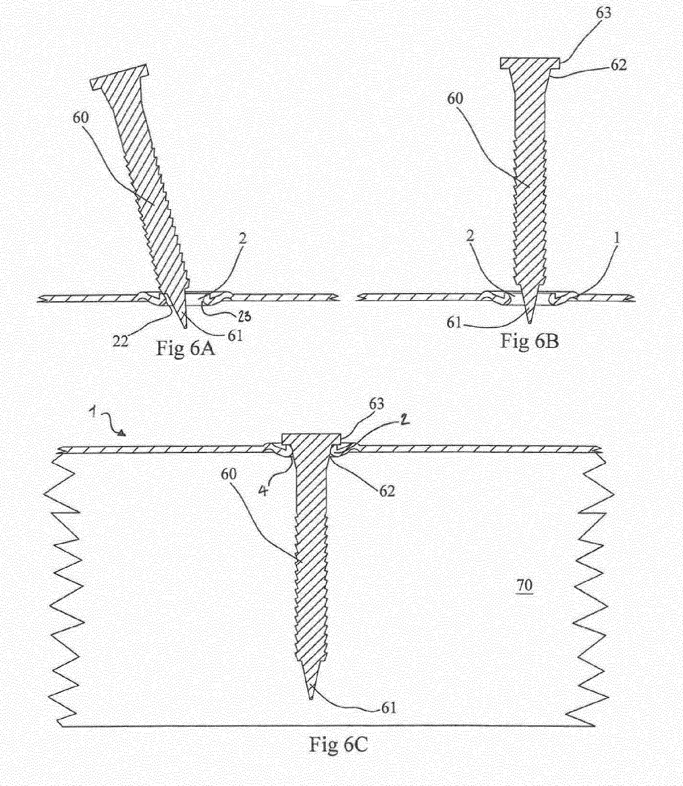

Fig. 6A-6C show the positioning of a nail 60 in the hole of e.g. a wind brace strip. In Fig. 6A, it is seen that the curved surface 23 guides the tip 61 of the nail 60 towards the centre of the hole 2. Guiding the nail 60 in this manner reduces the risk of causing damage to the rim area of the hole 2. Such damage is likely to introduce indents and/or scratches that could lead to cracks.

Furthermore, as seen in Fig. 6B, the head of the nail 60 is typically provided with a tapering section 62 connecting the head 63 of the nail 60 with the body 64 of the nail. This helps to optimise the resulting connection between the wind brace strip and the nail.

Fig. 6C shows the piece 1, e.g. a wind brace strip, fastened to a piece of wood 70, e.g. a truss. It is preferred that the tapering section 62 and the inner surface of the annular wall 4 abut each other in the mounted situation. The head 63 abut the rim of the annular wall. In this way, it is achieved that the fastening means is kept in a fixed position in relation to the piece 1. In this way, the risk of introducing deformations to the hole is minimised, and thereby, the general introduction of weakened areas of the hole is minimised.

It is seen that the base section 24 is in close contact with the piece of wood 70. Thereby, it is achieved that the risk of damage to the piece 1, the wind brace strap, is minimised because the movement between the fastening means 60 in relation to the wind brace strap is minimised.

Whilst preferred embodiments of the present invention have been described above and illustrated in the drawings, these are by way of example only and non-limiting. It will be appreciated by those skilled in the art that many alternatives are possible within the ambit of the invention. As such, the true scope of the invention is that as set out in the appended claims.

Each feature disclosed in this specification (including the accompanying claims and drawings), may be replaced by alternative features serving the same, equivalent or similar purpose, unless expressly stated otherwise. Thus, unless expressly stated otherwise, each feature disclosed is one example only of a generic series of equivalent or similar features. In addition, all of the features disclosed in this specification (including the accompanying claims and drawings), and/or all of the steps of any method or process so disclosed, may be combined in any combination, except combinations where at least some of such features and/or steps are mutually exclusive.

Accordingly, while many different embodiments of the present invention have been described above, any one or more or all of the features described, illustrated and/or claimed in the appended claims may be used in isolation or in various combinations in any embodiment. As such, any one or more feature may be removed, substituted and/or added to any of the feature combinations described, illustrated and/or claimed. For the avoidance of doubt, any one or more of the features of any embodiment may be combined and/or used separately in a different embodiment with any other feature or features from any of the embodiments.

### List of reference numbers

- 1: Piece, wind brace strips/strap
- 2: Hole
- 3: Reinforced edge area
- 4: Annular wall area
- 5: Preliminarily formed hole
- 6: First, generally planar surface
- 7: Second, generally planar surface
- 8: Bead

- 10: Rim portion of preliminary formed hole
- 11: Lower die
- 12: Upper die
- 11': Lower die
- 12': Upper die
- 13: Forming, bending or drawing punch
- 14: Lower forming, bending or pressure punch

- 21: Sloped area
- 22: Inner surface
- 23: Curvature of inner surface
- 24: Base section
- 25: Outer surface

- 60: Fastening means/nail
- 61: Tip of fastening means
- 62: Tapering section of nail
- 63: Head of fastening means
- 64: Body of nail
- 70: Piece of wood, e.g. a truss

- 100: Piece body

- *h*: Height
- *t*: Thickness of the piece of metal strip material
- *t1*: Thickness of base section
- H: Area of contact between the wind brace strips and battens in the roof structure
- P_{d}: Protrusion of annular wall/ base section
- P_{b}: Protrusion of bead

## Claims

1. Piece (1) made from a metal sheet or strip material and having a piece body (100) defining an axis of extension (*AE*), the piece body (100) having a first, generally planar surface (6), an opposite second, generally planar surface (7) and a thickness (*t*) defined between the surfaces, said piece (1) being provided with at least one through-going hole (2) with a reinforced edge area (3), wherein the reinforced edge area comprises:
- a base section (24), and
- an annular wall (4) extending from the base section (24)at an angle of 45 to 135 degrees to the axis of extension (*AE*) of the piece body (100), said annular wall (4) defining a height (*h*) and comprising an outer wall surface (25) and an inner wall surface (22).

2. Piece (1) according to claim 1, wherein the annular wall (4) is radially surrounded by a bead (8) formed in the sheet or strip material, the bead (8) being a direct continuation of the piece body (100) connecting the piece body (100) and the base section (24) of the annular wall (4).

3. Piece (1) according to claim 2, wherein the bead (8) comprises an annular sloped area (21) extending from the piece body (100) towards the base section (24) of the annular wall (4).

4. Piece (1) according to any of the preceding claims, wherein at least a portion of the outer surface of the annular wall is substantially perpendicular to the axis of extension of the piece body, and wherein the inner surface of the annular wall tapers or curves or narrows towards a common edge between the inner and the outer surface of the annular wall of the rim portion of the wall.

5. Piece (1) according to any of the preceding claims, wherein the bead (8) protrudes relative to the first, generally planar surface (6) of the sheet or strip material, the protrusion (P_{b}) of the bead (8) being preferably less than 0.8 or 0.6 times the thickness (t) of the sheet or strip material.

6. Piece (1) according to any of the preceding claims, wherein at least a part of the base section (24) of the annular wall (4) has at least a portion with an increased thickness (*t1*) in relation to the thickness (*t*) of the piece body (100).

7. Piece (1) according to any of claims 4-6, wherein the base section (24) of the annular wall (4) is offset relative to the second, generally planar surface (7) of the strip or sheet material and the annular wall (4) arranged to protrude therefrom, the protrusion (P_{d}) of the base section of the annular wall (4) being preferably less than 0.8 or 0.6 times the thickness of the sheet or strip material.

8. Piece (1) according to claim 7, wherein the protrusion of the annular wall (4) and the protrusion (P_{b}) of the bead (8) are approximately 0.5 times the thickness (t) of the sheet or strip material.

9. Piece (1) according to any of the preceding claims, wherein the sheet or strip material is a steel material,wherein the steel material of the piece (1) preferably has a tensile strength of at least 220, 250, 280, 320, 350, 400, 450 or 550 MPa.

10. Piece (1) according to any of the preceding claims, wherein the height (h) of the annular wall (4) is less than 3, 2 or 1 times the thickness (t) of the sheet or strip material.

11. Piece (1) according to any of the preceding claims, further comprising a number of holes (2) and being a wind brace strap or strip, or an angle bracket or a column base bracket used in the construction industry.

12. Method of manufacturing a piece (1) for the construction industry made from a metal sheet or strip material having a first, generally planar surface (6), an opposite second, generally planar surface (7) and a thickness (t), said piece being provided with at least one through-going hole (10) with a reinforced edge area (3), said method comprising the following steps:
- (A) forming a preliminary hole (5) in the strip or sheet material, and
- (B) forming or bending a rim portion (10) of the preliminarily formed hole in the sheet or strip material into an annular wall with at least a portion arranged at an angle of 45 to 135 degrees relative to the piece body (100), whereby the reinforced edge area (3) is at least partially formed by theannular wall (4).

13. Method according to claim 12, further comprising the step of:
- (C) subsequent to step A forming a bead (8) radially surrounding the annular wall area (4) and being a direct continuation thereof.

14. Method according to any of claims 12-13, wherein step B comprises the sub step of:
- (B1) forming the inner surface (22) of the annular wall (4) to a tapered, curved or narrowed shape so as to form a tapering section extending from the common line between the annular wall (4) and the base section (24) to the common line between the outer surface (25) of the annular wall (4) and the edge e of the annular wall (4).

15. Method according to any of claims 12-14, wherein steps B1 and C are performed simultaneously.

16. Method according to claims 12-15, wherein the annular wall (4) and bead (8) are formed so that the annular wall protrudes relative to the second, generally planar surface (7), the protrusion (P_{d}) of the base section (24) of the annular wall (4) being preferably less than 0.8 or 0.6 times the thickness (t) of the material, and so that the bead (8) protrudes relative to the first, generally planar surface (6) of the sheet or strip material, the protrusion (P_{b}) of the bead (8) being preferably less than 0.8 or 0.6 times the thickness (t) of the sheet or strip material.

17. System for stabilising a structure against the forces subjected to the structure from the wind, the system comprising:
- a piece (1) according to claims 1-11, and
- a number of fastening means (60) for connecting the piece (1) to a construction.

18. A piece substantially as hereinbefore described with reference to or as shown in the accompanying drawings.

19. A method of manufacturing a piece for the construction industry substantially as hereinbefore described with reference to or as shown in the accompanying drawings.

20. System for stabilising a structure against the forces subjected to the structure from the wind substantially as hereinbefore described with reference to or as shown in the accompanying drawings.

21. Piece (1) made from a metal sheet or strip material and having a piece body (100) defining an axis of extension (AE), the piece body (100) having a first, generally planar surface (6), an opposite second, generally planar surface (7) and a thickness (t) defined between the surfaces, said piece (1) being provided with at least one through-going hole (2) with a reinforced edge area (3), wherein the reinforced edge area comprises:
- a base section (24), and
- an annular wall (4) extending from the base section (24) in a direction substantially perpendicular to the axis of extension (AE) of the piece body (100) towards a rim portion (10), said annular wall (4) defining a height (h) and comprising an outer wall surface (25) and an inner wall surface (22).

22. Piece according to any of claims 1 to 11 or claim 21, wherein the outer surface of the annular wall is substantially perpendicular to the axis of extension of the piece body, and wherein the inner surface of the annular wall tapers towards a common edge between the inner and the outer surface of the annular wall of the rim portion of the wall.

23. Piece (1) according to any of claims 1 to 11 or claim 21 or claim 22, wherein at least a part of the base section (24) of the annular wall (4) has an increased thickness (*t1*) in relation to the thickness (*t*) of the piece body (100) measured perpendicular to the piece body (100).

24. Method of manufacturing a piece (1) for the construction industry made from a metal sheet or strip material having a first, generally planar surface (6), an opposite second, generally planar surface (7) and a thickness (*t*), said piece being provided with at least one through-going hole (10) with a reinforced edge area (3), said method comprising the following steps:
- (A) forming a preliminary hole (5) in the strip or sheet material, and
- (B) bending a rim portion (10) of the preliminarily formed hole in the sheet or strip material into an angle of substantially 90° relative to the piece body (100), whereby the reinforced edge area (3) is formed as an annular wall (4).

25. System for stabilising a structure against the forces subjected to the structure from the wind, the system comprising:
- a piece (1) according to claims 1-11 or claims 21 to 23, and
- a number of fastening means (60) for connecting the piece (1) to a construction, e.g. a roof construction comprising trusses (51).
